# FASCICULE DE BREVET EUROPEEN

(11) **EP 3 234 848 B1**
(45) Date de publication et mention de la délivrance du brevet: **11.08.2021**
(21) Numéro de dépôt: 15823678.6
(22) Date de dépôt: 18.12.2015
(51) Int. Cl.: G06F 21/52, G06F 21/77

(54) **PROCEDE D'ENVOI D'UNE INFORMATION DE SECURITE ET DISPOSITIF ELECTRONIQUE APTE A METTRE EN OEUVRE UN TEL PROCEDE**
VERFAHREN ZUM SENDEN EINES SICHERHEITSINFORMATIONSELEMENTS UND ELEKTRONISCHE VORRICHTUNG ZUR IMPLEMENTIERUNG SOLCH EINES VERFAHRENS
METHOD OF DISPATCHING AN ITEM OF SECURITY INFORMATION AND ELECTRONIC DEVICE ABLE TO IMPLEMENT SUCH A METHOD

(30) Priorité: 18.12.2014 FR 1462781
(43) Date de publication de la demande: 25.10.2017
(73) Titulaire: IDEMIA France, 92400 Courbevoie (FR)
(72) Inventeur: CHAMBEROT, Francis, 92700 Colombes (FR); VAURES, Pierre, 92700 Colombes (FR); VILAIN, Antoine, 92700 Colombes (FR)
(74) Mandataire: Cabinet Beau de Loménie
(86) Numéro de dépôt international: PCT/FR2015/053630
(87) Numéro de publication internationale: WO 2016/097650

(56) Documents cités:
- CONSTANTINOS MARKANTONAKIS ED - BRUCE SCHNEIER ET AL: "Secure Log File Download Mechanisms for Smart Cards", 1 janvier 2006 (2006-01-01), SMART CARD. RESEARCH AND APPLICATIONS LECTURE NOTES IN COMPUTER SCIENCE;;LNCS, SPRINGER, BERLIN, DE, PAGE(S) 285 - 304, XP019048907, ISBN: 978-3-540-67923-3 *1 Introduction* *2 Applications* *3 Model of SmRT Card Environment* * 4.4 Using an ALSS in a Remote Location*
- B. ROBISSON ET AL: "Management of the security in smart secure devices", SMART SYSTEMS INTEGRATION, DRESDEN, 22 - 23 MARCH 2011, 1 janvier 2011 (2011-01-01), XP055064434, Germany ISBN: 978-3-80-073324-8
- Anonymous: "EMV Transaction Flow Chart", , 19 October 2014 (2014-10-19), XP055595513, Retrieved from the Internet: URL:https://web.archive.org/web/2014101912 2240/https://www.level2kernel.com/flow-cha rt.html [retrieved on 2019-06-11]

## Description

### Arrière-plan de l'invention

La présente invention se situe dans le domaine général des dispositifs électroniques aptes à coopérer avec un terminal externe afin de réaliser une opération, telle qu'une transaction par exemple.

L'invention concerne en particulier la remontée d'informations utiles par de tels dispositifs électroniques vers le terminal externe afin de réaliser un traitement approprié.

L'invention s'applique plus particulièrement, mais de manière non exclusive, aux cartes à puce cartes (ou cartes à microcircuit), conformes par exemple à la norme ISO7816. L'invention vise notamment l'utilisation d'une carte à puce fonctionnant selon le protocole EMV (pour « Europay Mastercard Visa ») pour remonter des informations de sécurité à un terminal externe (ou lecteur).

De manière générale, une carte à puce est conçue pour communiquer avec un dispositif externe à cette carte, autrement appelé terminal ou lecteur. Ces cartes permettent d'effectuer divers types de transactions, telles que des transactions de paiement ou d'authentification du porteur, par exemple. Les cartes à puce pour applications bancaires (carte de crédit, carte de débit etc.), par exemple, sont aptes à communiquer avec des terminaux de paiement.

EMV est le protocole standardisé utilisé majoritairement dans le monde pour sécuriser notamment les transactions de paiement effectuées par des cartes à puce.

Le protocole EMV a été conçu pour diminuer les risques de fraudes lors d'une transaction de paiement en permettant notamment l'authentification à la fois de la carte à puce et de son porteur. Ce processus d'authentification fait appel à une combinaison de cryptogrammes (ou clés cryptées) et de signatures numériques et nécessite éventuellement la saisie d'un code secret (appelé communément code PIN) par le porteur de la carte.

Suivant le type de carte utilisé, la situation, ou encore le montant considéré, une carte EMV peut fonctionner en ligne ou hors ligne. En mode en ligne, la carte EMV peut communiquer, via le lecteur, avec l'entité émettrice correspondante (la banque à l'origine de la carte, par exemple) afin de vérifier que la transaction en cours est légitime. En revanche, si la carte EMV fonctionne en mode hors ligne, celle-ci applique des critères de vérification préenregistrés pour décider si la transaction doit être autorisée ou refusée.

De nombreux mécanismes de sécurité ont récemment été développés afin de sécuriser autant que possible l'usage croissant des cartes à puce, de type EMV notamment.

Il a par exemple été développé des cartes à puce EMV aptes à détecter des attaques, de type optique ou autre, réalisées à leur encontre par des personnes ou entités malveillantes. Sur détection d'une telle attaque, la carte à puce efface les données sensibles qu'elle contient en mémoire et se rend volontairement inopérationnelle. Si un dialogue EMV est initié avec un lecteur, la carte répond à un message RESET (RST) par une réponse ATR (ANSWER TO RESET) modifiée indiquant que la transaction ne peut avoir lieu. Peu ou pas d'information est cependant inclus dans cette réponse ATR de sorte qu'il est difficile du côté lecteur de déterminer la cause de l'échec du dialogue.

Il n'existe pas aujourd'hui de mécanisme satisfaisant permettant de remonter efficacement des informations de sécurité depuis une carte à puce (ou plus généralement depuis un dispositif électronique) vers un lecteur afin de permettre une meilleure évaluation des risques de sécurité, d'identifier de possibles attaques rencontrées par la carte à puce ou encore de réaliser des traitements en fonction de certains comportements observés au niveau de la carte.

Les possibilités de suivi des comportements d'un porteur d'une carte à puce (ou équivalents) ou des opérations réalisées par cette carte sont aujourd'hui limitées et appelles à de nouveaux mécanismes de remonter d'information de la carte vers le lecteur, voire vers un tiers distant tel que l'émetteur de la carte à puce par exemple.

Exemples de l'art antérieur sont les documents suivants : CONSTANTINOS MARKANTONAKIS ED - BRUCE SCHNEIER ET AL: "Secure Log File Download Mechanisms for Smart Cards", 1 janvier 2006 (2006-01-01), SMART CARD. RESEARCH AND APPLICATIONS LECTURE NOTES IN COMPUTER SCIENCE;;LNCS, SPRINGER, BERLIN, DE, PAGE(S) 285 - 304.

XP019048907,ISBN: 978-3-540-67923-3 Anonymous: "EMV Transaction Flow Chart", 19 octobre 2014 (2014-10-19), XP055595513, Extrait de l'Internet: URL:https://web.archive.org/ web/20141019122240/https://www.level2kernel.com/flow-chart.html

Il existe en particulier un besoin pour une solution permettant de remonter de tels informations sans modifier en profondeur les protocoles de communication actuels (de type EMV par exemple) mis en œuvre collectivement par les dispositifs électroniques et les lecteurs associés.

### Objet et résumé de l'invention

L'invention est définie par les revendications ci-après.

A noter que les programme d'ordinateur mentionnes dans le présent expose peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

De plus, les supports d'enregistrement (ou d'information) mentionnés dans le présent exposé peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 représente sous forme d'un organigramme un exemple de coopération entre une carte à puce et un terminal externe conformément au protocole EMV ;
- la figure 2 représente, de manière schématique, l'architecture matérielle d'une carte à puce conforme à une mise en œuvre particulière de l'invention ;
- la figure 3 représente schématiquement des modules mis en œuvre par la carte à puce de la figure 2 ;
- la figure 4 représente, de manière schématique, l'architecture matérielle d'un lecteur de carte conforme à une mise en œuvre particulière de l'invention, ce lecteur étant apte à coopérer avec la carte à puce représentée en figures 2 et 3;
- la figure 5 représente schématiquement des modules mis en œuvre par le lecteur de carte de la figure 4 ;
- la figure 6 représente, sous forme d'un organigramme, un procédé d'envoi réalisé par la carte à puce de la figure 2 conformément à une mise en œuvre particulière de l'invention ;
- la figure 7 représente, sous forme d'un organigramme, un procédé d'envoi et un procédé de traitement conformes à un premier mode de réalisation de l'invention ;
- la figure 8 représente, sous forme d'un organigramme, un procédé d'envoi et un procédé de traitement conformes à un deuxième mode de réalisation de l'invention ; et
- la figure 9 représente, sous forme d'un organigramme, un procédé d'envoi et un procédé de traitement conformes à un troisième mode de réalisation de l'invention.

### Description détaillée de plusieurs modes de réalisation

Comme indiqué ci-avant, la présente invention se situe dans le domaine général des dispositifs électroniques aptes à coopérer avec un terminal externe (ou lecteur) afin de réaliser une opération telle qu'une transaction par exemple.

L'invention concerne en particulier la remontée d'informations de sécurité par de tels dispositifs électroniques vers le terminal externe afin de permettre une évaluation optimale de certains risques de sécurité, d'identifier de possibles attaques rencontrées par le dispositif électronique ou encore de réaliser des traitements en fonction de certains comportements observés au niveau du dispositif électronique.

La présente invention est décrite dans l'exposé qui suit dans le cadre d'une carte à puce (conforme par exemple à la norme ISO7816) de type EMV, cette carte étant apte à remonter des informations de sécurité à un lecteur externe lors d'une transaction EMV. On comprendra toutefois que d'autres types de protocole peuvent être envisagés dans le cadre de l'invention.

L'invention vise plus généralement un dispositif électronique destiné à coopérer avec un terminal externe (ou lecteur) pour réaliser une opération, typiquement une transaction (de paiement par exemple). Ce dispositif électronique est en particulier apte à fournir une information de sécurité au lecteur après avoir démarrer une transaction avec celui-ci.

La notion de transaction est ici entendue au sens large et comprend par exemple, dans le domaine bancaire, aussi bien une transaction de paiement ou de transfert que d'une consultation d'un compte bancaire sur un terminal bancaire. L'invention est décrite ici dans le cadre d'une carte de paiement destinée à réaliser des transactions bancaires. On comprendra que d'autres types de transactions ou opérations sont envisageables dans le cadre de l'invention.

On notera également que, dans les exemples de réalisation qui suivent, la carte à puce coopère en mode contact avec le lecteur. L'invention s'applique toutefois également au cas où la carte à puce communique en mode sans contact avec le lecteur.

Sauf indications contraires, les éléments communs ou analogues à plusieurs figures portent les mêmes numéros de références et présentent des caractéristiques identiques ou analogues, de sorte que ces éléments communs ne sont généralement pas à nouveau décrits par souci de simplicité.

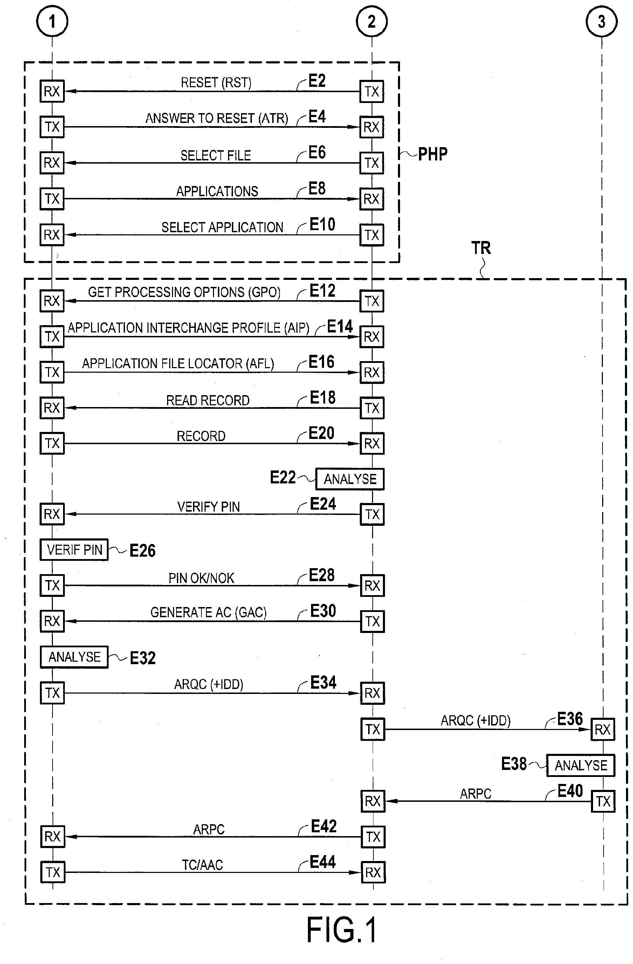

Afin de faciliter la compréhension de l'invention, on décrit à présent, en référence à la **figure 1****,** un exemple d'une transaction de paiement conforme au protocole EMV, à l'aide d'une carte à puce 1 coopérant avec un lecteur (ou terminal) externe 2. Le lecteur 2 est apte à communiquer avec un serveur bancaire 3 associé à l'émetteur de la carte à puce 1. Dans cet exemple, la carte à puce 1 est une carte de paiement et le lecteur 2 est un terminal de paiement.

Comme indiqué ci-après, la carte à puce 1 fonctionne ici en mode avec vérification du code secret bien que l'on puisse envisager des variantes selon lesquelles la carte à puce 1 ne procède pas à la vérification du code secret (mode sans vérification du code secret).

Une carte à puce EMV de paiement contient généralement différentes applications bancaires permettant par exemple de fonctionner en mode « carte de crédit » ou « carte de débit » dans un point de vente ou encore d'interagir avec un guichet automatique bancaire.

On suppose ici que le porteur insert la carte à puce 1 dans le lecteur 2.

Le protocole EMV comprend une phase préliminaire PHP destinée à préparer la carte à puce 1 et le lecteur 2 à la mise en œuvre à suivre de la transaction TR elle-même. Différents messages conformes au protocole EMV sont échangés entre la carte à puce 1, le lecteur 2 et (dans cet exemple) le serveur bancaire 3 au cours de la phase PHP puis de la transaction TR.

Plus précisément, lors de la phase préliminaire PHP, le lecteur 2 envoie (E2) tout d'abord un message RESET (RST) à la carte de paiement 1. La carte de paiement 1 répond (E4) à l'aide d'un message ANSWER TO RESET (ATR).

Une fois ce premier dialogue effectué, le lecteur 2 tente de choisir l'application appropriée sur la carte de paiement 1. Pour ce faire, le lecteur 2 envoie (E6) à la carte 1 une commande SELECT FILE afin de demander à la carte de paiement 1 les applications que cette dernière est capable d'exécuter. Cette commande SELECT FILE contient typiquement en paramètre l'identifiant d'application (AID pour « Application Identifier ») « 1PAY.SYS.DDF01 ». En réponse, la carte 1 fournit (E8) au lecteur 2 une liste des différentes applications qu'elle peut mettre en œuvre. Le porteur peut alors sélectionner via le lecteur 2 le mode de transaction souhaité, déclenchant ainsi l'envoi (E10) vers la carte 1 d'une commande SELECT APPLICATION avec en paramètre l'identifiant AID de l'application sélectionnée. A noter qu'il existe divers variantes pour sélectionner l'application appropriée dans la carte à puce 1.

Le lecteur 2 envoie (E10) en outre une commande GET PROCESSING OPTIONS (GPO) à la carte à puce 1 afin d'initier le début de la transaction. L'envoi de cette commande GPO marque le début de la transaction EMV.

Au cours de cette transaction TR, la carte de paiement 1 envoie (E14) au lecteur 2 une première série d'informations, telles que l'AIP (Application Interchange Profile) qui indique au lecteur 2 les différentes opérations à faire pour mener à bien une transaction. La carte 1 envoie (E16) également un message AFL (Application File Locator) qui indique la liste des données disponibles au niveau de l'application dans la carte 1 et que le lecteur 2 doit aller lire pour pouvoir réaliser la transaction TR. Le lecteur 2 lit (E18-E20) ainsi les informations spécifiées dans l'AFL. Pour ce faire, le lecteur 2 envoie (E18) une ou plusieurs commandes de lecture READ RECORD à la carte de paiement 1 et reçoit (E20) en retour les informations demandées (appelés RECORDS).

A noter que les étapes E14 et E16 peuvent être réalisées au cours de l'envoi d'un même message depuis la carte à puce 4.

Les informations lues (E18-E20) par le lecteur 2 dans la carte 1 comprennent par exemple la date d'expiration de la carte à puce 1, le numéro de compte associé, une signature numérique pour authentifier la carte 1, des paramètres de contrôle à utiliser par la suite pour réaliser la transaction, ou encore des listes d'objets dites listes CDOL (pour Card Data Object List).

Divers modes de réalisation sont envisageables. Dans cet exemple, le lecteur 2 réalise (E22) ensuite une étape d'analyse à partir des informations fournies (E20) par la carte de paiement 1. Si l'authentification associée à la carte de paiement 1 échoue, si une anomalie est détectée ou encore si un risque trop important est détecté, le lecteur 2 peut refuser la transaction. On suppose ici que l'analyse E22 est passée avec succès.

Le protocole EMV se poursuit ici avec une phase d'authentification du porteur de la carte à puce 1 selon l'une des méthodes listées et supportées par ladite carte. Le lecteur 2 détermine le procédé d'authentification du porteur à appliquer en fonction des informations précédemment reçues dans les paramètres de contrôle. Cette phase permet en particulier au terminal de paiement de déterminer si la transaction est effectuée en mode avec vérification de code ou en mode sans vérification de code.

Dans cet exemple, où le mode avec vérification de code est mis en œuvre, le porteur est invité à saisir son code PIN à l'aide du clavier dont est généralement muni le lecteur 2. Le lecteur 2 envoie (E24) alors à la carte de paiement 1 une requête VERIFY de vérification du code PIN saisi par le porteur. La carte de paiement 1 compare (E26) alors le code PIN saisi par le porteur avec le code PIN authentique inclus dans sa mémoire et en déduit si le porteur est authentique ou non.

Si le code PIN saisi est bon, la carte de paiement 1 envoie (E28) un message OK de type 0x9000 au terminal. Dans le cas contraire, la carte envoie (E28) un message de refus de type 0x63Cx au terminal, dans lequel x est le nombre de tentatives de code PIN restantes avant que la carte 1 bloque la transaction en cours (et les transactions à venir). On ne s'intéresse ici qu'au cas d'une vérification de code PIN hors ligne, c'est-à-dire sans que le lecteur 2 fasse appel à l'émetteur de la carte dans le processus de vérification du code PIN, bien que cela soit également possible.

Une fois le porteur authentifié, le protocole EMV se poursuit avec une phase de vérification de la transaction. Plus précisément, le lecteur 2 génère puis envoie (E28) à la carte 1 une commande GAC (pour GENERATE AC). Cette commande contient différentes données demandées préalablement par la carte de paiement 1 dans une liste CDOL reçue à l'étape E20 par le lecteur 2. Typiquement, la commande GAC contient des informations telles que le montant de la transaction en cours, la devise utilisée, le type de transaction, etc.

En réponse à la commande GAC, la carte 1 réalise (E32) une étape d'analyse comprenant un certain nombre de vérifications de critères. Le nombre et la nature de ces vérifications ne sont pas normalisés par le protocole EMV et peuvent varier selon le cas.

A l'issue de l'analyse E32, la carte de paiement 1 répond au lecteur 2 en envoyant (E34) un cryptogramme (ou certificat cryptographique) qui comprend un code d'authentification de message (ou MAC pour Message Authentification Code), ce dernier étant typiquement crypté à partir d'une clé cryptographique mémorisée dans la carte à puce 1. La réponse de la carte dépend notamment du paramétrage de la carte 1 effectué par la banque émettrice.

Dans cet exemple, la carte à puce 1 envoie (E34) un cryptogramme ARQC (Autorisation Request Cryptogram) indiquant que la carte 1 souhaite poursuivre la transaction en ligne avec le serveur bancaire 3 de l'émetteur de la carte. La carte de paiement 1 peut en outre envoyer (E34) le cas échéant des informations IDD (pour Issuer Discretionnary Data) au lecteur 2 en plus du cryptogramme.

Le lecteur 2 transmet (E36) ainsi le cryptogramme ARQC (et le cas échéant les informations IDD) au serveur bancaire 3 au niveau duquel est réalisé (E38) une nouvelle analyse à partir des informations reçues. Cette analyse E38 comprend typiquement un certain nombre de vérifications afin de s'assurer que la transaction est valide. Le lecteur 2 reçoit (E40) en réponse un message crypté ARPC indiquant la décision de l'émetteur. Le lecteur 2 transmet (E42) ce message ARPC à la carte de paiement 1 afin de lui indiquer la décision prise par l'émetteur.

Si la carte 1 accepte la transaction, celle-ci envoie (E44) en réponse un cryptogramme de type TC (transaction acceptée) au lecteur 2. Dans le cas contraire, la carte 1 envoie (E44) un cryptogramme de type AAC indiquant le refus de la transaction.

Chacun des messages ci-dessus échangés selon le protocole EMV pendant la transaction TR, en particulier entre la carte à puce 1 et le lecteur 2, constitue des exemples de messages de transaction au sens de l'invention.

Il convient de rappeler ici que le déroulement du protocole EMV décrit ci-dessus en référence à la **figure 1** ne constitue qu'un exemple non limitatif. Le protocole EMV offre en effet de nombreuses alternatives. Il incombe aux intégrateurs de faire les choix nécessaires pour adapter l'exécution du protocole selon les besoins (méthode d'authentification du porteur, transaction en ligne ou hors ligne etc.).

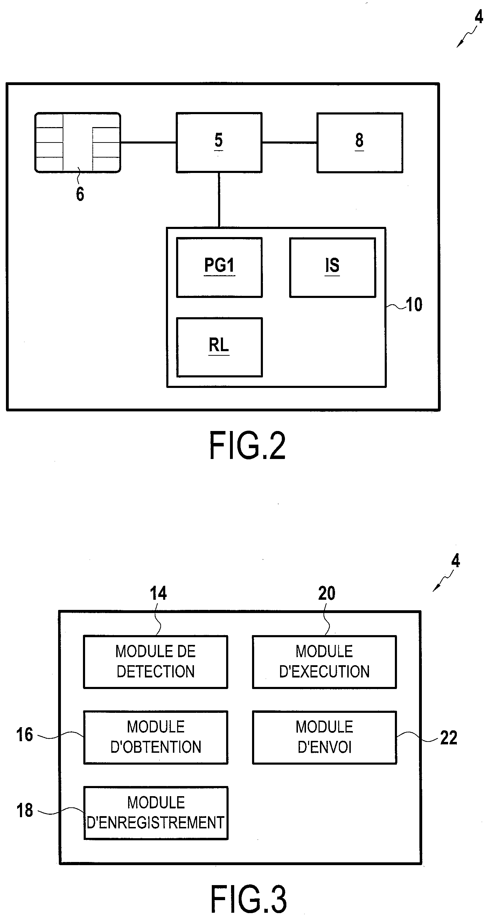

La **figure 2** représente, de manière schématique, l'architecture matérielle d'une carte à puce 4 conforme à un mode de réalisation particulier de l'invention. La carte 4 est dans cet exemple une carte EMV conforme à la norme ISO 7816.

Plus particulièrement, la carte à puce 4 comprend ici un microprocesseur 5 couplé à des contacts externes 6 (ports d'entrées/sorties), une mémoire volatile réinscriptible (de type RAM) 8 et une mémoire non volatile réinscriptible 10 (de type Flash par exemple). La carte 4 peut également comprendre une mémoire morte (de type ROM) non représentée ici.

On considère ici que la mémoire 10 est sécurisée, en faisant appel à un mécanisme de sécurité classique bien connu de l'homme du métier et qui ne sera donc pas décrit ici.

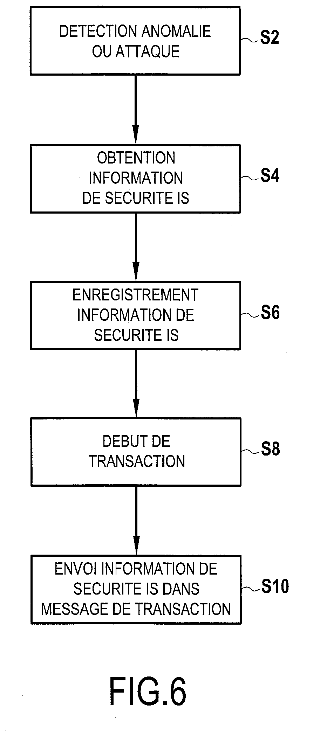

La mémoire 10 constitue ici un support d'enregistrement (ou d'information) conforme à un mode de réalisation de l'invention, lisible par la carte à puce 4, et sur lequel est enregistré un programme d'ordinateur PG1 conforme à un mode de réalisation de l'invention. Le programme PG1 comporte des instructions pour l'exécution des étapes d'un procédé d'envoi d'une information de sécurité IS pouvant également être stockée dans la mémoire 10, conformément à un mode de réalisation de l'invention. Des exemples de réalisation de ce procédé sont représentés sur les **figures 6** à **9** décrites ultérieurement.

Dans l'exemple considéré ici, la mémoire 10 de la carte à puce 4 comporte en outre au moins une règle prédéfinie RL qui sera décrite ultérieurement.

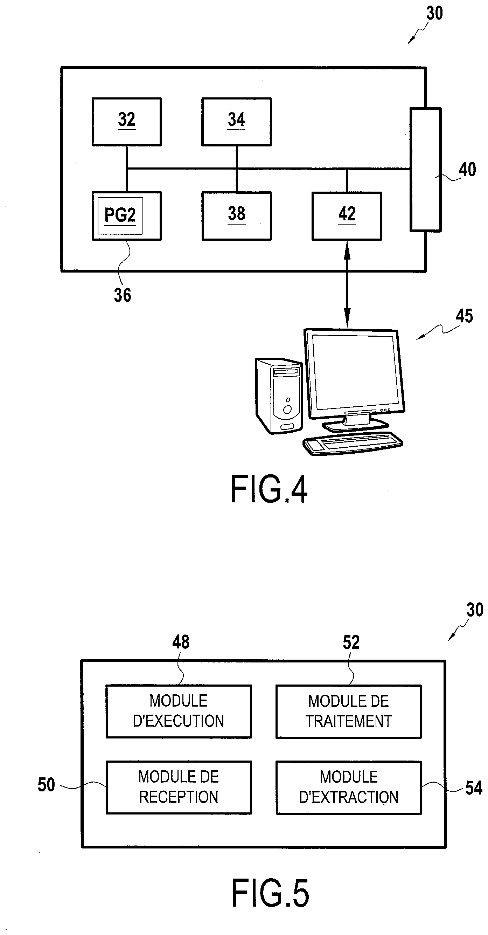

Les contacts externes 6 constituent ici un module d'interface permettant à la carte à puce 4 (et plus particulièrement au microprocesseur 5) d'établir une communication, par contact dans cet exemple, avec une entité externe telle que le terminal 30 décrit ci-après en référence à la **figure 4****.** On comprendra que d'autres types de module d'interface peuvent toutefois être envisagés comme un module d'interface permettant d'établir une communication sans contact (comportant une antenne radiofréquence par exemple) entre la carte à puce et un terminal externe.

Dans un exemple particulier, la carte à puce 4 comporte au moins un capteur (non représenté sur les figures) apte à détecter une attaque survenant à l'encontre du dispositif électronique. Ce capteur peut être par exemple un capteur optique et/ou électromagnétique. Ce capteur permet par exemple de détecter une attaque de type optique (attaque par laser par exemple) et/ou électromagnétique.

La **figure 3** représente schématiquement des modules pouvant être mis en œuvre par le microprocesseur 5 exécutant le programme PG1, à savoir : un module de détection 14 d'un événement EVT, un module d'obtention 16 d'une information de sécurité IS, un module d'enregistrement 18 d'une telle information de sécurité, un module d'exécution 20 permettant notamment le démarrage d'une transaction EMV et un module 22 apte à envoyer l'information de sécurité IS lors d'une transaction EMV.

Dans un exemple particulier, le module de détection 14 comprend au moins l'un parmi :
- un premier module de traitement (non représenté) apte à détecter l'événement EVT à partir d'une commande (de type APDU par exemple) reçue d'une entité externe (telle que le terminal 30 représenté en **figure 4****)** par le module d'interface 6 de la carte à puce 4 ; et
- un capteur (non représenté) apte à détecter une attaque survenant à l'encontre de la carte à puce 4, et un deuxième module de traitement (non représenté) apte à détecter l'événement EVT à partir de l'attaque détectée.

La commande (de type APDU ou autre) est par exemple reçue par la carte à puce 4 lors d'une transaction donnée (de type EMV par exemple) avec un terminal externe, cette commande étant reçue du terminal externe via les contacts externes 6.

Par ailleurs, comme déjà expliqué, le capteur mentionné ci-avant peut par exemple être un capteur optique et/ électromagnétique apte à détecter une attaque optique et/ou magnétique rencontrée par la carte à puce 4, cette attaque étant par exemple perpétrée par une personne ou un dispositif malveillant.

La **figure 4** représente, de manière schématique, l'architecture matérielle d'un terminal externe 30 (ici un lecteur de carte) selon un mode de réalisation particulier de l'invention. Ce lecteur de carte 30 est ici apte à coopérer selon le protocole EMV avec la carte à puce 4.

Plus particulièrement, le lecteur de carte 30 comprend un microprocesseur 32, une mémoire morte (de type ROM) 34, une mémoire non volatile réinscriptible 36, une interface homme/machine 38 permettant à un utilisateur d'interagir avec le lecteur 30, un connecteur 40 compatible avec les contacts externes de la carte à puce 4, et une interface de communication 42 permettant au lecteur 30 de communiquer avec une entité externe telle que le serveur distant 45 dans le cas d'espèce. Le serveur distant 45 est ici associé à l'émetteur (typiquement une banque) de la carte à puce 4.

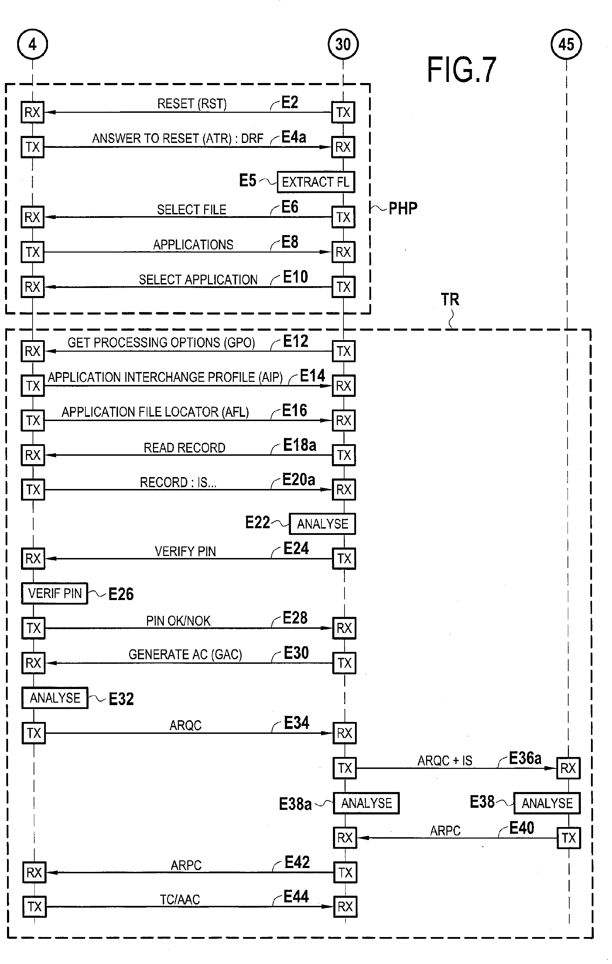

La mémoire 36 constitue dans cet exemple un support d'informations conforme à un mode de réalisation de l'invention, lisible par le lecteur 30, et sur lequel est enregistré un programme d'ordinateur PG2 conforme à un mode de réalisation de l'invention. Ce programme PG2 comporte des instructions pour l'exécution des étapes d'un procédé de traitement selon un mode de réalisation de l'invention. Des exemples de réalisation de ce procédé sont représentés ci-après en référence aux **figures 7** à **9****.**

La **figure 5** représente schématiquement des modules pouvant être mis en œuvre par le microprocesseur 32 du lecteur 30 exécutant le programme PG2, à savoir : un module d'exécution 48 permettant de démarrer une transaction TR avec la carte à puce 4 (envoi d'un message GPO), un module de réception 50 apte à recevoir une information de sécurité IS contenue dans un message de transaction provenant de la carte à puce 4, un module de traitement 52 apte à réaliser un traitement à partir de l'information de sécurité IS reçue et, éventuellement, un module d'extraction 54 apte à extraire une donnée de référence DRF d'un message reçu de la carte à puce 4 comme décrit plus en détail ultérieurement.

Une mise en œuvre particulière de l'invention est à présent décrite en référence à la **figure 6****.** Plus précisément, la carte à puce 4 met en œuvre un procédé d'envoi en exécutant le programme PG1.

La carte à puce 4 détecte (S2) en premier lieu un événement EVT. Cet évènement est par exemple représentatif d'une anomalie rencontrée par la carte à puce 4 ou d'une attaque à l'encontre de la carte à puce 4.

Dans l'exemple décrit ici, la détection S2 de l'évènement EVT est réalisée par le module de détection 14 illustré en **figure 3****.**

Dans un cas particulier, l'évènement EVT satisfait au moins l'une des conditions suivantes :
- l'événement EVT cause une réinitialisation de la carte à puce 4 ; et
- l'événement EVT comprend l'exécution par la carte à puce 4 d'une commande ou d'une opération affectant un code PIN (code secret) stocké dans une mémoire sécurisée de la carte à puce 4. Les commandes CHANGE PIN ou UNBLOCK PIN sont des exemples d'une telle commande.

Plus généralement, l'événement EVT détecté (S2) par la carte à puce 4 peut être un quelconque événement rencontré par la carte à puce 4 et que celle-ci juge digne d'intérêt, ce jugement étant éventuellement réalisé à partir d'au moins une condition préenregistrée dans une règle RL.

L'événement EVT ainsi détecté par la carte à puce 4 peut correspondre à un ou à une pluralité d'événements.

La détection de l'événement EVT intervient par exemple lors d'une interaction avec un lecteur ou un terminal externe (lors d'une transaction par exemple). Dans un exemple particulier, une commande (de type APDU par exemple) d'un terminal externe est reçue par la carte à puce 4 via les contacts externes 6. Le module de détection 14 (ou plus particulièrement, un premier module de traitement compris dans le module de détection 14) détecte alors l'événement EVT à partir de la commande reçue ou, éventuellement, à partir d'un traitement réalisé par le premier module de traitement à partir de ladite commande.

Alternativement, l'évènement EVT peut être une attaque (de type optique et/ou électromagnétique) à l'encontre de la carte à puce 4, cette attaque étant détectée par le module de détection 14, ce dernier utilisant en particulier un capteur apte à détecter l'attaque et une deuxième module de traitement apte à détecter l'événement EVT à partir de l'attaque détectée. Dans ce cas, l'attaque n'est donc pas détectée en utilisant les contacts externes 6 (ou tout autre module d'interface de la carte à puce apte à communiquer avec un terminal externe) mais grâce à un capteur approprié de la carte à puce 4, comme déjà expliqué ci-avant.

Sur détection de l'évènement EVT, la carte à puce 4 obtient (S4) une information de sécurité IS représentative de cet événement. Pour ce faire, la carte à puce 4 applique par exemple une règle RL contenue en mémoire 10, cette règle spécifiant pour au moins un événement donné une information IS à générer.

Dans l'exemple décrit ici, l'obtention S4 de l'information de sécurité IS est réalisée par le module d'obtention 16 illustré en **figure 3****.**

La carte à puce 4 enregistre (S6) ensuite cette information de sécurité IS en mémoire 10. La carte à puce 4 créée par exemple un fichier (appelé ici fichier LOG) comprenant chaque information de sécurité IS obtenue.

Dans l'exemple décrit ici, l'enregistrement S6 est réalisé par le module d'enregistrement 18 illustré en **figure 3****.**

On suppose que, après l'enregistrement S6, une transaction de type EMV est démarrée (S8) entre la carte à puce 4 et le lecteur externe 30. Ceci intervient typiquement lorsque la carte 4 est introduite par l'utilisateur dans le lecteur 30 en vue de réaliser une opération bancaire (consultation de compte, paiement, transfert...).

Comme déjà indiqué, le protocole EMV est ici mis en œuvre. Par conséquent, la carte à puce 4 et le lecteur 30 réalisent ensemble la phase préliminaire PHP (échange des messages RST et ATR etc.) déjà décrite en référence à la **figure 1****.** Comme déjà indiqué, la réception par la carte à puce 4 du message GPO provenant du lecteur 30 marque ensuite le début S8 de la transaction EMV.

Dans l'exemple décrit ici, c'est le module d'exécution 20 illustré en **figure 3** qui réalise la phase préliminaire PHP et qui procède au début S8 de la transaction TR (réception du GPO) avec le lecteur externe 30.

Conformément à l'invention, la carte à puce 4 envoie (S10) au lecteur 30 l'information de sécurité IS dans un message de transaction lors de la transaction TR. Divers messages de transaction EMV peuvent être utilisés pour transporter l'information de sécurité IS jusqu'au lecteur 30, comme expliqué plus en détail en référence aux **figures 7** à **9****.**

Dans l'exemple décrit ici, l'envoi S10 de l'information de sécurité IS est réalisée par le module d'envoi 22 illustré en **figure 3****.**

Dans une mise en œuvre particulière, la carte à puce 4 prend la décision d'envoyer ou non (S10) au lecteur 30, pendant la transaction, une information de sécurité IS stockée en mémoire dans la carte 4, cette décision étant prise en appliquant une règle RL prédéfinie (stockée en mémoire 10) définissant au moins une condition préenregistrée. La carte à puce 4 décide d'envoyer une information de sécurité IS seulement si une condition préenregistrée associée à l'information IS est satisfaite.

Dans un exemple particulier, la carte à puce 4 n'est pas capable de poursuivre la transaction TR avec le lecteur 30 une fois l'envoi S10 de l'information de sécurité IS effectué, en raison par exemple d'une attaque ou d'une anomalie rencontrée par la carte. Selon une variante, la carte à puce est apte à poursuive la transaction TR normalement selon le protocole EMV une fois l'information de sécurité IS envoyée (S10) au lecteur 30.

Comme déjà indiqué, la nature de l'événement EVT détecté en S2 par la carte à puce 4 peut varier selon le cas. Il en va de même pour l'information de sécurité IS pouvant être remontée au terminal 30.

Selon un exemple particulier, l'événement EVT est détecté (S2) par la carte à puce 4 à partir de la valeur courante d'un compteur enregistrée dans la carte à puce 4. Ce compteur représente par exemple un nombre consécutif d'essais manqués de saisie d'un code secret. Ce code secret peut être un code PIN à saisir par l'utilisateur sur le lecteur de carte 30 coopérant avec la carte à puce 4 afin d'authentifier l'utilisateur lors d'une transaction. La carte à puce 4 est par exemple configurée pour détecter une anomalie (en tant qu'événement EVT) en comparant la valeur courante de ce compteur d'essais manqués de saisie d'un code secret avec une valeur seuil. Par exemple, si la valeur courante atteint une valeur seuil prédéfinie, la carte à puce 4 le détecte en tant qu'événement EVT. Dans un exemple particulier, la carte à puce 4 est configurée pour enregistrer la valeur courante dudit compteur.

Selon un exemple particulier, l'événement EVT est une erreur de transaction détectée par la carte à puce 4 lors d'une transaction. La carte à puce 4 est par exemple apte à détecter une erreur de transaction à partir d'au moins une information de transaction reçue et enregistrée dans la carte à puce 4 lors d'une transaction (de type EMV par exemple). La carte à puce 4 est par exemple configuré pour remonter en S10 l'information de transaction au terminal 30.

Selon un exemple particulier, la carte à puce 4 détecte en tant qu'événement EVT le fait qu'un compteur enregistré dans la carte à puce 4 dépasse une valeur seuil prédéterminée. Le compteur représente par exemple un nombre total de transactions incomplètes réalisées par la carte à puce 4. L'information de sécurité IS envoyée en S10 par la carte à puce 4 au terminal 30 peut comprendre ledit compteur du nombre total de transactions incomplètes. Dans un exemple particulier, le compteur comprend une pluralité de composantes, le compteur pouvant indiquer un type d'attaque mise en œuvre contre la carte à puce, ou encore quel type de défaillance présente la carte à puce.

Selon un exemple particulier, la carte à puce détecte, en tant qu'événement EVT, un intervalle de temps entre (1) l'envoi d'une réponse, par la carte à puce 4, à une commande du terminal externe 30 ; et (2) la réception d'une commande subséquente du terminal externe 30. La carte à puce 4 est alors configurée pour enregistrer puis envoyer, en tant qu'information de sécurité IS, une donnée représentative dudit l'intervalle de temps, lors des étapes S6 et S10 respectivement. Dans un exemple particulier, la carte à puce 4 décide si elle doit enregistrer à l'étape S6 une donnée représentative d'un tel intervalle de temps, à partir d'une comparaison entre ledit intervalle de temps détecté et une valeur seuil prédéterminée.

Comme déjà décrit, divers types d'information de sécurité IS peuvent être envisagés dans le cadre de l'invention.

Dans un exemple particulier, l'information de sécurité IS comprend une donnée représentant la valeur courante d'un compteur enregistrée dans la carte à puce 4. Ce compteur peut comprendre au moins l'un des compteurs décrits ci-avant. En particulier, le compteur représente par exemple au moins l'un parmi :
- un nombre consécutif d'essais manqués de saisie d'un code secret ; et
- un nombre total de transactions incomplètes réalisées par la carte à puce 4.

Dans un exemple particulier, l'information de sécurité IS comprend ladite valeur courante elle-même ou encore un paramètre indiquant que la valeur courante du compteur a atteint une valeur seuil prédéfinie.

Selon un exemple particulier, la donnée de sécurité IS est représentative d'une erreur de transaction détectée et enregistrée par la carte à puce 4 lors d'une transaction.

La remontée de l'information de sécurité IS lors d'une transaction permet d'informer le lecteur 30, et éventuellement le serveur bancaire 45, de l'occurrence d'un évènement relatif par exemple à une attaque survenue à l'encontre de la carte à puce 4, à un risque de sécurité associé à la carte à puce 4 et/ou à son porteur, ou encore à un comportement observé antérieurement au niveau de la carte à puce 4.

A partir de l'information de sécurité IS reçue, le lecteur 30 est capable de réaliser un traitement particulier comme par exemple évaluer un risque lié à la transaction en cours ou transmettre l'information de sécurité IS au serveur distant 45.

Plusieurs modes de réalisation du procédé d'envoi mis en œuvre par la carte à puce 4 et du procédé de traitement mis en oeuvre par le lecteur 30 sont à présent décrits en référence aux **figures 7** à **9****.**

On suppose dans les modes de réalisation illustrés en **figures 7** à **9** que la carte à puce 4 à déjà réalisé les étapes S2 à S8 lorsqu'elle reçoit (E2) un message RST du lecteur 30. Comme indiqué par la suite, on peut toutefois envisager des variantes selon lesquelles au moins l'une des étapes S2 à S6 est réalisée par la carte à puce 4 après la réception par cette dernière du message RST, voire même après le début de la transaction S8.

Selon un premier mode de réalisation illustré en **figure 7****,** la carte à puce 4 et le lecteur 30 coopère selon le protocole EMV.

Le déroulement du protocole EMV diffère ici de l'exemple décrit en **figure 1** en ce que le message RST envoyé par la carte à puce 4 est utilisé pour permettre au lecteur 30 de lire l'information de sécurité IS dans la mémoire de la carte à puce 4 lors de la transaction TR.

Dans cet exemple, le lecteur reçoit (E2) un message RST du lecteur 30. En réponse, la carte à puce 4 envoie (E4a) un message ATR modifié, ce message contenant une donnée de référence DRF permettant au lecteur 30 de lire l'information de sécurité IS dans la mémoire sécurisée 10 de la carte à puce 4.

Au cours d'une étape E5, le lecteur 30 extrait la donnée de référence DRF du message ATR.

Les étapes E6 à E16 sont réalisées comme déjà décrites en référence à la **figure 1****.**

En réponse au message EFL envoyé (E16) par la carte à puce 4, le lecteur 30 réalise la lecture (E18-E20a) dans la mémoire de la carte à puce 4 des informations spécifiées dans le message AFL. Dans ce premier mode de réalisation, le lecteur 30 lit en outre l'information de sécurité IS stockée dans la mémoire 10 de la carte à puce 4 en utilisant la donnée de référence DRF. Cette donnée DRF renseigne par exemple sur une adresse mémoire où est stockée l'information de sécurité IS.

Le lecteur 30 réalise ensuite un traitement approprié à partir de l'information de sécurité IS reçue.

Dans cet exemple, les étapes E24 à E34 sont réalisées comme déjà décrites en référence à la **figure 1****.** Le lecteur 30 transmet (E36a) ensuite, au serveur distant 45, le message ARQC (préalablement reçu de la carte à puce 4 à l'étape E34) ainsi que l'information de sécurité IS.

Le serveur distant 45 (ou un autre terminal associé) réalise (E38) ensuite une analyse à partir des informations reçues, y compris si nécessaire l'information de sécurité IS.

Le lecteur 30 peut également réaliser (E38a) une analyse à partir de l'information de sécurité IS. Suite à cette analyse, le lecteur peut si besoin adapter le traitement de la transaction TR en cours, afin par exemple de rejeter la transaction ou de mettre en œuvre des mécanismes de sécurité supplémentaires.

Les étapes E40 à E44 sont réalisées comme déjà décrites en référence à la **figure 1****.**

Selon une variante de ce premier mode de réalisation, la carte à puce 30 transmet la donnée de référence DRF non pas dans le message ATR (E4) mais dans le message APPLICATIONS en E8.

On notera que, dans ce premier mode de réalisation, le lecteur 30 est modifié afin d'être capable de reconnaître la donnée de référence DRF incluses dans le message ATR (ou APPLICATIONS) en tant que telle, et de l'utiliser afin de récupérer l'information de sécurité IS de la carte à puce 4.

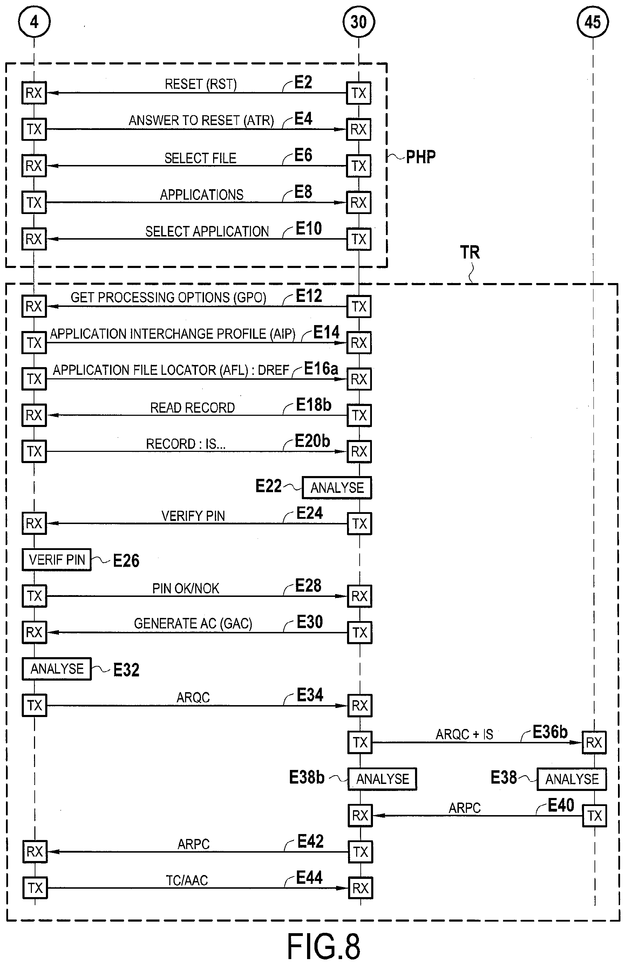

Selon un deuxième mode de réalisation illustré en **figure 8****,** la carte à puce 4 et le lecteur 30 coopère également selon le protocole EMV.

Le déroulement du protocole EMV diffère ici du premier mode de réalisation décrit en référence à la **figure 7** en ce que la carte à puce 4 transmet (E16a) la donnée de référence DRF directement dans le message de transaction AFL.

Le lecteur 30 lit ensuite dans la carte à puce 4 les informations nécessaires, à savoir celles spécifiées dans l'AFL. Pour ce faire, le lecteur 30 envoie (E18b) une ou plusieurs commandes en lecture à la carte à puce 4 à laquelle celle-ci répond en fournissant (E20b) au lecteur 30 les informations demandées. Le lecteur 30 lit en particulier l'information de sécurité IS stockée dans la mémoire 10 de la carte à puce 4 à l'aide de la donnée de référence DRF.

Le lecteur 30 transmet (E36b) l'information de sécurité IS au serveur distant 45 et/ou réalise (E38b) une analyse à partir de l'information de sécurité IS de façon analogue aux étapes respectives E36a et E38a précédemment décrites.

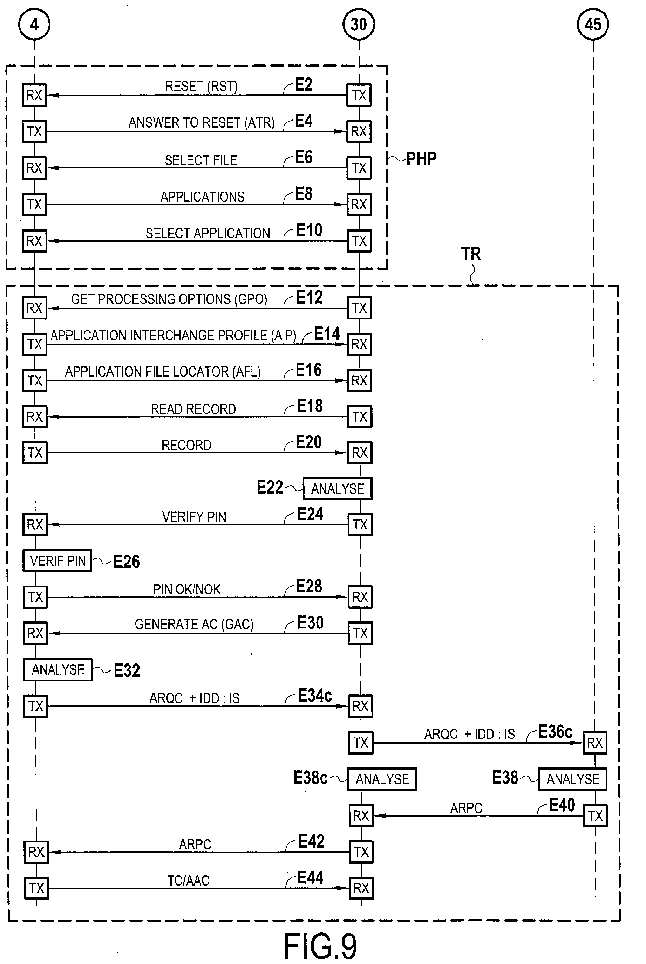

Selon un troisième mode de réalisation illustré en **figure 9****,** la carte à puce 4 et le lecteur 30 coopère également selon le protocole EMV.

Le déroulement du protocole EMV diffère ici des premier et deuxième modes de réalisation décrit en référence aux **figures 7** et **8** en ce que la carte à puce 4 transmet (E34c) au lecteur 30, après l'analyse E32, l'information de sécurité IS en tant que IDD (Issuer Discretionnary Data). Cette donnée IDD (comme toutes données IDD) n'est pas interprétable par le lecteur 30 qui se contente de la transmettre (E36c) au serveur distant 45.

Ce troisième mode de réalisation met à profit la possibilité offerte par le protocole EMV de fournir des informations en tant que IDD au lecteur puis au serveur distant.

Une analyse peut ensuite être réalisé au niveau du serveur distant 45 à partir des informations reçues, y compris de l'information de sécurité IS.

Dans ce troisième mode de réalisation, le lecteur 30 réalise (E38c) en outre une analyse à partir de l'information de sécurité IS de façon analogue à l'analyse E38a ou E38b mentionnée ci-avant.

On notera que dans les deuxième et troisième modes de réalisation décrit ci-avant en référence aux **figures 8** et **9****,** le lecteur 30 réalise le procédé de traitement de l'invention sans qu'il y ait besoin de modifier le protocole EMV. On utilise en effet le message de transaction AFL ou les informations IDD pour transmettre l'information de sécurité IS au lecteur 30.

De plus, dans les premier et deuxième modes de réalisation décrits ci-avant en référence aux **figures** 7 et **8****,** le lecteur 30 envoie une commande de lecture à la carte à puce 4 indiquant que le lecteur 30 souhaite accéder à l'information de sécurité 30. Dans le troisième mode de réalisation, en revanche, le lecteur 30 ne sollicite pas l'envoi par la carte à puce 4 de l'information de sécurité IS, et transmet celle-ci en tant que IDD au serveur distant 45 comme déjà indiqué.

Selon une mise en oeuvre particulière, au moins l'une parmi l'étape de détection S2, l'étape d'obtention S4 de l'information de sécurité IS et l'étape de stockage S6 de l'information de sécurité IS est réalisée par la carte à puce 4 pendant la phase préliminaire PHP (i.e. après la réception par la carte du message RST provenant du lecteur 30), voire même pendant la transaction TR en cours (i.e. après la réception par la carte du message GPO provenant du lecteur 30).

Dans un cas particulier, la carte à puce 4 choisit la méthode de transmission de l'information de sécurité IS parmi plusieurs disponibles (par exemple parmi au moins deux des méthodes décrites ci-avant) en fonction du moment où la carte à puce 4 détecte qu'elle a une information de sécurité IS à transmettre au lecteur. Le choix de la méthode d'envoi peut est réalisé par exemple à l'aide d'au moins une règle RL préenregistrée en mémoire dans la carte à puce 4.

Selon un exemple particulier, la carte à puce 4 détecte à un instant T1 qu'elle détient une information de sécurité IS à transmettre, et transmet alors l'information de sécurité IS comme suit :
- si T1 est avant l'envoi par la carte à puce 4 de l'ATR, la carte transmet l'information de sécurité IS au lecteur 30 en mettant en oeuvre le premier mode de réalisation illustré en **figure 7** (utilisation de l'ATR puis envoi de IS pendant la transaction TR) ;
- si T1 est après l'envoi de l'ATR mais avant l'envoi du message APPLICATIONS, la carte 4 fournit la donnée de référence DRF au lecteur 30 en utilisant le message APPLICATIONS et envoie par la suite IS pendant la transaction TR (variante du premier mode de réalisation) ;
- si T1 est après l'envoi de APPLICATIONS mais avant la réception de GPO, la carte 4 envoie la donnée de référence DRF dans le message AFL et envoie par la suite IS pendant la transaction TR (deuxième mode de réalisation illustré en **figure 8****)** ; et
- si T1 est après la réception de GPO mais avant la réception de GAC, la carte 4 envoie l'information de sécurité IS au lecteur 30 en tant qu'IDD en réponse au GAC (troisième mode de réalisation illustré en **figure 9****).**

La présente invention permet avantageusement de remonter efficacement des informations de sécurité depuis une carte à puce (ou plus généralement depuis un dispositif électronique) vers un lecteur (ou terminal) externe afin de permettre la réalisation d'un traitement approprié par le lecteur et, le cas échéant, par un tiers tel que l'émetteur de la carte à puce par exemple.

La remontée de telles informations de sécurité permet notamment d'évaluer des risques de sécurité associés à la carte à puce et/ou à la transaction en cours (voire même à une transaction passée), d'identifier de possibles attaques rencontrées dans le passé par la carte à puce ou encore de réaliser des traitements en fonction de certains comportements observés dans le passé au niveau de la carte.

Si, par exemple, une commande visant à modifier le code PIN de la carte a été exécutée par la carte à puce ou si cette dernière s'est réinitialiser suite à un événement donné, l'invention prévoit dans un cas particulier de stocker dans la carte à puce une information de sécurité représentative de cet évènement et de transférer de la carte à puce au lecteur ladite information afin d'en informer ensuite l'émetteur de la carte à puce. L'émetteur, typiquement la banque émettrice de cette carte, peut ainsi analyser le ou les évènements rencontrés par la carte et prendre si besoin les mesures nécessaires comme par exemple contacter le propriétaire de la carte, bloquer la carte ou encore refuser la transaction en cours.

L'invention offre un mécanisme souple et efficace pour mettre en œuvre des analyses de risque et/ou de comportement à partir d'événements détectés par la carte à puce.

L'invention est avantageuse en ce qu'il est possible de mettre en œuvre la remontée d'information de sécurité vers le lecteur, voire vers le serveur distant sans qu'il soit nécessaire de modifier le déroulement général d'un protocole de type EMV par exemple.

Un homme du métier comprendra que les modes de réalisation et variantes décrits ci-avant ne constituent que des exemples non limitatifs de mise en œuvre de l'invention. En particulier, l'homme du métier pourra envisager une quelconque combinaison des variantes et modes de réalisation décrits ci-avant afin de répondre à un besoin bien particulier.

## Revendications

1. Procédé d'envoi d'une information de sécurité (IS) mis en œuvre par un dispositif électronique (4), ledit procédé comprenant les étapes suivantes :
- détection (S2) d'un événement rencontré par le dispositif électronique ;
- enregistrement (S6), dans une mémoire sécurisée (10) du dispositif, d'une information de sécurité (IS) représentative dudit événement ;
- démarrage (S8), avant ou suite audit enregistrement, d'une transaction (TR) avec un terminal externe (30) ; et
- envoi (S10) au terminal externe de l'information de sécurité (IS) dans un message de transaction (E20a ; E20b ; E34c) lors de ladite transaction (TR)
dans lequel la transaction (TR) et le message de transaction comportant l'information de sécurité (IS) sont conformes au protocole EMV, Europay Mastercard Visa,
dans lequel l'évènement détecté par le dispositif électronique (4) comprend au moins l'un parmi :
- une anomalie rencontrée par le dispositif électronique ; et
- une attaque à l'encontre du dispositif électronique.

2. Procédé selon la revendication 1, dans lequel l'évènement est détecté par le dispositif électronique (4) à partir de la valeur courante d'un compteur.

3. Procédé selon la revendication 2, dans lequel l'évènement (EVT) est une anomalie ou attaque détectée par le dispositif électronique (4) en comparant la valeur courante du compteur avec une valeur seuil.

4. Procédé selon la revendication 2 ou 3, dans lequel le compteur représente au moins l'un parmi :
- un nombre consécutif d'essais manqués de saisie d'un code secret ; et
- un nombre total de transactions incomplètes réalisées par le dispositif électronique (4).

5. Procédé selon l'une quelconque des revendications 2 à 4, dans lequel l'information de sécurité (IS) comprend la valeur courante dudit compteur enregistré dans la mémoire sécurisée.

6. Procédé selon la revendication 1, dans lequel le dispositif électronique (4) détecte, en tant qu'événement (EVT) lors de ladite détection (S2), un intervalle de temps entre :
- l'envoi d'une réponse, par ledit dispositif électronique, à une commande du terminal externe (30) ; et
- la réception d'une commande subséquente du terminal externe (30).

7. Procédé selon la revendication 6, dans lequel ledit dispositif électronique (4) est configuré pour décider, à partir d'une comparaison entre ledit intervalle de temps et une valeur seuil prédéterminée, si une donnée représentative dudit intervalle de temps doit être enregistrée lors de l'étape d'enregistrement.

8. Procédé selon l'une quelconque des revendications 1 à 7, dans lequel ledit événement satisfait au moins l'une des conditions suivantes :
- l'évènement cause une réinitialisation du dispositif électronique (4) ; et
- l'évènement comprend l'exécution par le dispositif électronique (4) d'une opération affectant un code confidentiel stocké dans une mémoire sécurisée du dispositif électronique.

9. Procédé selon l'une quelconque des revendications 1 à 8, dans lequel un comportement anormal du dispositif électronique ou une attaque à l'encontre dudit dispositif électronique est détecté si au moins une condition préenregistrée dans le dispositif électronique est satisfaite.

10. Procédé selon l'une quelconque des revendications 1 à 9, comprenant un envoi au terminal externe, dans un message AFL, d'une donnée de référencement (DRF) permettant au terminal externe (3) de lire l'information de sécurité (IS) dans la mémoire sécurisée (10) du dispositif électronique ;
l'information de sécurité (IS) étant envoyée (S10, E20a) au terminal externe en réponse à une commande de lecture (E18a) reçue du terminal externe suite à l'envoi du message AFL.

11. Procédé selon l'une quelconque des revendications 1 à 9, comprenant l'envoi au terminal externe (30), dans un message conforme à la norme EMV de type ATR ou APPLICATIONS, d'une donnée de référencement (DRF) lui permettant de lire l'information de sécurité (IS) dans la mémoire sécurisée (IS) du dispositif électronique.

12. Procédé selon l'une quelconque des revendications 1 à 9, l'information de sécurité étant envoyée (S10, E34c) au terminal externe (30) en tant que donnée non interprétable (IDD) par le terminal externe en réponse à un message GENERATE AC reçu (E30) du terminal externe.

13. Programme d'ordinateur (PG1) comportant des instructions pour l'exécution des étapes d'un procédé d'envoi selon l'une quelconque des revendications 1 à 12 lorsque ledit programme est exécuté par un processeur (5).

14. Support d'enregistrement (10) lisible par un processeur (5) sur lequel est enregistré un programme d'ordinateur (PG1) comprenant des instructions pour l'exécution des étapes d'un procédé d'envoi selon l'une quelconque des revendications 1 à 12.

15. Procédé de traitement mise en œuvre par un terminal externe (30) à un dispositif électronique (4), ledit procédé comprenant les étapes suivantes :
- démarrage (E12) d'une transaction (TR) avec le dispositif électronique (4) ;
- réception (E20a ; E20b ; E34c), en provenance du dispositif électronique, d'un message de transaction contenant une information de sécurité (IS) lors de la transaction (TR), ladite information de sécurité étant représentative d'un événement détecté par le dispositif électronique ; et
- traitement (E36a, E38a ; E36b, E38b ; E36c, E38c) de l'information de sécurité,
dans lequel la transaction (TR) et le message de transaction comportant l'information de sécurité (IS) sont conformes au protocole EMV, Europay Mastercard Visa,
le traitement comprenant une analyse à partir de l'information de sécurité et une adaptation si besoin du traitement de la transaction à l'information de sécurité,
dans lequel l'évènement représenté par l'information de sécurité comprend au moins l'un parmi :
- une anomalie rencontrée par le dispositif électronique ; et
- une attaque à l'encontre du dispositif électronique.

16. Procédé de traitement selon la revendication 15, dans lequel ledit traitement comprend au moins l'un parmi :
- réalisation (E38c) d'une analyse de risque associée à ladite transaction à partir de l'information de sécurité ; et
- envoi (E36c) de l'information de sécurité à un serveur distant (45) du terminal externe.

17. Dispositif électronique (4) comprenant :
- un module de détection (14) d'un événement rencontrée par le dispositif électronique ;
- un module d'obtention (16) d'une information de sécurité représentative dudit événement ;
- un module d'enregistrement (18), dans une mémoire sécurisée du dispositif, de l'information de sécurité;
- un module d'exécution (20) apte à démarrer, avant ou suite à l'enregistrement de l'information de sécurité, une transaction avec le terminal externe ; et
- un module d'envoi (22) au terminal externe de l'information de sécurité dans un message de transaction lors de ladite transaction
dans lequel la transaction (TR) et le message de transaction comportant l'information de sécurité (IS) sont conformes au protocole EMV, Europay Mastercard Visa, et
dans lequel l'évènement détecté par le dispositif électronique (4) comprend au moins l'un parmi :
- une anomalie rencontrée par le dispositif électronique ; et
- une attaque à l'encontre du dispositif électronique.

18. Dispositif selon la revendication 17, dans lequel le module d'exécution (20) est apte à poursuivre jusqu'à son terme la transaction une fois l'information de sécurité envoyée au terminal externe.

19. Dispositif électronique selon la revendication 17 ou 18, le dispositif électronique étant une carte à puce.

20. Dispositif électronique selon l'une quelconque des revendications 17 à 19, le module de détection comprenant au moins l'un parmi :
- un premier module de traitement apte à détecter ledit événement à partir d'une commande reçue d'une l'entité externe par un module d'interface du dispositif électronique, ledit module d'interface permettant établir une communication entre le dispositif électronique et ladite entité électronique ; et
- un capteur apte à détecter une attaque survenant à l'encontre du dispositif électronique et un deuxième module de traitement apte à détecter ledit événement à partir de l'attaque détectée.

21. Terminal (30) externe à un dispositif électronique (4), ledit terminal comprenant :
- un module d'exécution (48) apte à démarrer une transaction (TR) avec le dispositif électronique ;
- un module de réception (50) apte à recevoir du dispositif électronique un message de transaction contenant une information de sécurité (IS) lors de la transaction, ladite information de sécurité étant représentative d'un événement détecté par le dispositif électronique (4) ; et
- un module de traitement (52) de l'information de sécurité,
dans lequel la transaction (TR) et le message de transaction comportant l'information de sécurité (IS) sont conformes au protocole EMV, Europay Mastercard Visa,
le module de traitement étant configuré pour réaliser une analyse à partir de l'information de sécurité et pour adapter si besoin le traitement de la transaction à l'information de sécurité,
dans lequel l'évènement représenté par l'information de sécurité comprend au moins l'un parmi :
- une anomalie rencontrée par le dispositif électronique ; et
- une attaque à l'encontre du dispositif électronique.

22. Terminal (30) selon la revendication 21, le terminal comprenant :
un module d'extraction (54) apte à extraire, d'un message ATR reçu du dispositif électronique (4) lors de la transaction (TR), une donnée de référencement (DRF) permettant au terminal de lire l'information de sécurité (IS) dans une mémoire sécurisée (10) du dispositif électronique.

## Patentansprüche

1. Verfahren zum Senden einer Sicherheitsinformation (IS), das von einer elektronischen Vorrichtung (4) umgesetzt wird, wobei das Verfahren die folgenden Schritte aufweist:
- Erfassen (S2) eines Ereignisses, auf das die elektronische Vorrichtung gestoßen ist,
- Speichern (S6) von einer Sicherheitsinformation (IS), die für das Ereignis repräsentativ ist, in einem gesicherten Speicher (10),
- Starten (S8) einer Transaktion (TR) mit einem externen Endgerät (30) vor oder nach dem Speichern und
- Senden (S10) während der Transaktion (TR) der Sicherheitsinformation (IS) an das externe Endgerät in einer Transaktionsnachricht (E20a; E20b; E34c),
wobei die Transaktion (TR) und die Transaktionsnachricht, die die Sicherheitsinformation (IS) enthält, mit dem EMV-Protokoll (Europay, Mastercard, Visa) konform sind,
wobei das Ereignis, das von der elektronischen Vorrichtung (4) erfasst wird, mindestens eines aufweist unter:
- einer Anomalie, auf die die elektronische Vorrichtung gestoßen ist, und
- einem Angriff auf das elektronische Gerät.

2. Verfahren nach Anspruch 1, wobei das Ereignis von der elektronischen Vorrichtung (4) ausgehend von dem aktuellen Wert eines Zählers erfasst wird.

3. Verfahren nach Anspruch 2, wobei das Ereignis (EVT) eine Anomalie oder ein Angriff ist, die oder der von der elektronischen Vorrichtung (4) durch Vergleichen des aktuellen Wertes des Zählers mit einem Schwellwert erfasst wird.

4. Verfahren nach Anspruch 2 oder 3, wobei der Zähler mindestens eine darstellt unter:
- einer aufeinanderfolgenden Anzahl von misslungenen Versuchen der Eingabe eines Geheimcodes und
- einer Gesamtanzahl von unvollständigen Transaktionen, die von der elektronischen Vorrichtung (4) durchgeführt werden.

5. Verfahren nach einem der Ansprüche 2 bis 4, wobei die Sicherheitsinformation (IS) den aktuellen Wert des Zählers aufweist, der in dem gesicherten Speicher gespeichert wird.

6. Verfahren nach Anspruch 1, wobei die elektronische Vorrichtung (4) als Ereignis (EVT) beim Erfassen (S2) ein Zeitintervall erfasst zwischen:
- dem Senden von einer Antwort durch die elektronische Vorrichtung auf einen Befehl des externen Endgeräts (30) und
- dem Empfangen eines anschließenden Befehls des externen Endgeräts (30).

7. Verfahren nach Anspruch 6, wobei die elektronische Vorrichtung (4) konfiguriert ist, um ausgehend von einem Vergleichen zwischen dem Zeitintervall und einem vorbestimmten Schwellenwert zu entscheiden, ob eine Dateneinheit, die für das Zeitintervall repräsentativ ist, beim Schritt des Speicherns gespeichert werden soll.

8. Verfahren nach einem der Ansprüche 1 bis 7, wobei das Ereignis mindestens eine der folgenden Bedingungen erfüllt:
- das Ereignis bewirkt ein Zurücksetzen des elektronischen Geräts (4) und
- das Ereignis umfasst das Ausführen eines Vorgangs durch das elektronische Gerät (4), der einen vertraulichen Code betrifft, der in einem gesicherten Speicher des elektronischen Geräts gespeichert wird.

9. Verfahren nach einem der Ansprüche 1 bis 8, wobei ein anormales Verhalten der elektronischen Vorrichtung oder ein Angriff auf die elektronische Vorrichtung erfasst wird, wenn mindestens eine Bedingung, die in dem elektronischen Gerät vorab gespeichert wird, erfüllt wird.

10. Verfahren nach einem der Ansprüche 1 bis 9, umfassend ein Senden in einer AFL-Nachricht einer Dateneinheit zur Referenzierung (DRF), die dem externen Endgerät (3) ermöglicht, die Sicherheitsinformation (IS) in dem gesicherten Speicher (10) der elektronischen Vorrichtung zu lesen, an das externe Endgerät,
wobei die Sicherheitsinformation (IS) als Antwort auf einen Lesebefehl (E18a), der von dem externen Endgerät nach dem Senden der AFL-Nachricht empfangen wird, an das externe Endgerät gesendet wird (S10, E20a).

11. Verfahren nach einem der Ansprüche 1 bis 9, umfassend ein Senden in einer Nachricht, die dem EMV-Standard entspricht, wie z.B. ATR oder APPLICATIONS, einer Dateneinheit zur Referenzierung (DRF), an das externe Endgerät (30), die ihm ermöglicht, die Sicherheitsinformation (IS) in dem gesicherten Speicher (IS) der elektronischen Vorrichtung zu lesen.

12. Verfahren nach einem der Ansprüche 1 bis 9, wobei die Sicherheitsinformation als nicht interpretierbare Dateneinheit (IDD) von dem externen Endgerät als Antwort auf eine GENERATE AC-Nachricht, die von dem externen Endgerät empfangen wird (E30), an das externe Endgerät (30) gesendet wird (S10, E34c).

13. Computerprogramm (PG1), das Anweisungen für das Ausführen der Schritte eines Verfahrens nach einem der Ansprüche 1 bis 12 aufweist, wenn das Programm von einem Prozessor (5) ausgeführt wird.

14. Aufzeichnungsmedium (10), das von einem Prozessor (5) lesbar ist, auf dem ein Computerprogramm (PG1) aufgezeichnet ist, das Anweisungen für das Ausführen der Schritte eines Verfahrens zum Senden nach einem der Ansprüche 1 bis 12 aufweist.

15. Verfahren zum Verarbeiten, das von einem externen Endgerät (30) an einer elektronischen Vorrichtung (4) umgesetzt wird, wobei das Verfahren die folgenden Schritte aufweist:
- Starten (E12) einer Transaktion (TR) mit der elektronischen Vorrichtung (4),
- Empfangen (E20a; E20b; E34c) einer Transaktionsnachricht, die die Sicherheitsinformation (IS) enthält, von der elektronischen Vorrichtung während der Transaktion (TR), wobei die Sicherheitsinformation für ein Ereignis repräsentativ ist, das von der elektronischen Vorrichtung erfasst wird, und
- Verarbeiten (E36a, E38a; E36b, E38b; E36c, E38c) der Sicherheitsinformation,
wobei die Transaktion (TR) und die Transaktionsnachricht, die die Sicherheitsinformation (IS) enthält, mit dem EMV-Protokoll (Europay, Mastercard, Visa) konform sind,
wobei das Modul zum Verarbeiten die Sicherheitsinformation analysiert und gegebenenfalls das Verarbeiten der Transaktion an die Sicherheitsinformation anpasst,
wobei das Ereignis, das von der Sicherheitsinformation dargestellt wird, mindestens eines aufweist unter:
- einer Anomalie, auf die die elektronische Vorrichtung gestoßen ist, und
- einem Angriff auf das elektronische Gerät.

16. Verfahren zum Verarbeiten nach Anspruch 15, wobei das Verarbeiten mindestens eines aufweist unter:
- Erstellen (E38c) von einer Risikoanalyse im Zusammenhang mit der Transaktion ausgehend von der Sicherheitsinformation und
- Senden (E36c) der Sicherheitsinformation an einen Remote-Server (45) des externen Endgeräts.

17. Elektrische Vorrichtung (4), umfassend:
- ein Modul zum Erfassen (14) eines Ereignisses, auf das die elektronische Vorrichtung gestoßen ist,
- ein Modul zum Erhalten (16) von einer Sicherheitsinformation, die für das Ereignis repräsentativ ist,
- ein Modul zum Speichern (18) der Sicherheitsinformation in einem gesicherten Speicher der Vorrichtung,
- ein Ausführungsmodul (20), das geeignet ist, vor oder nach dem Speichern der Sicherheitsinformation eine Transaktion mit dem externen Endgerät zu starten, und
- ein Modul zum Senden (22) der Sicherheitsinformation während der Transaktion in einer Transaktionsnachricht an das externe Endgerät,
wobei die Transaktion (TR) und die Transaktionsnachricht, die die Sicherheitsinformation (IS) enthält, mit dem EMV-Protokoll (Europay, Mastercard, Visa) konform sind,
wobei das Ereignis, das von der elektronischen Vorrichtung erfasst wird, (4) mindestens eines aufweist unter:
- einer Anomalie, auf die die elektronische Vorrichtung gestoßen ist, und
- einem Angriff auf das elektronische Gerät.

18. Vorrichtung nach Anspruch 17, wobei das Ausführungsmodul (20) geeignet ist, die Transaktion bis zu ihrem Ende abzuwickeln, sobald die Sicherheitsinformation an das externe Endgerät geschickt worden ist.

19. Elektronische Vorrichtung nach Anspruch 17 oder 18, wobei die elektronische Vorrichtung eine Chipkarte ist.

20. Elektronische Vorrichtung nach einem der Ansprüche 17 bis 19, wobei das Modul zum Erfassen mindestens eines aufweist unter:
- einem ersten Verarbeitungsmodul, das geeignet ist, das Ereignis ausgehend von einem Befehl zu erfassen, der von einer externen Einheit durch ein Schnittstellenmodul der elektronischen Vorrichtung empfangen wird, wobei das Schnittstellenmodul ermöglicht, eine Kommunikation zwischen der elektronischen Vorrichtung und der elektronischen Einheit aufzubauen, und
- einem Sensor, der geeignet ist, einen Angriff zu erfassen, der gegen die elektronische Vorrichtung stattfindet, und einem zweiten Verarbeitungsmodul, das geeignet ist, das Ereignis ausgehend von dem erfassten Angriff zu erfassen.

21. Endgerät (30) außerhalb einer elektronischen Vorrichtung (4), wobei das Endgerät aufweist:
- ein Ausführungsmodul (48), das geeignet ist, eine Transaktion (TR) mit der elektronischen Vorrichtung zu starten,
- ein Modul zum Empfangen (50), das geeignet ist, von der elektronischen Vorrichtung eine Transaktionsnachricht, die die Sicherheitsinformation (IS) enthält, während der Transaktion zu empfangen, wobei die Sicherheitsinformation für ein Ereignis repräsentativ ist, das von der elektronischen Vorrichtung (4) erfasst wird, und
- ein Modul zum Verarbeiten (52) der Sicherheitsinformation,
wobei die Transaktion (TR) und die Transaktionsnachricht, die die Sicherheitsinformation (IS) enthält, mit dem EMV-Protokoll (Europay, Mastercard, Visa) konform sind,
wobei das Modul zum Verarbeiten die Sicherheitsinformation analysiert und gegebenenfalls die Verarbeitung der Transaktion an die Sicherheitsinformation anpasst,
wobei das Ereignis, das von der Sicherheitsinformation dargestellt wird, mindestens eines aufweist unter:
- einer Anomalie, auf die die elektronische Vorrichtung gestoßen ist, und
- einem Angriff auf das elektronische Gerät.

22. Endgerät (30) nach Anspruch 21, wobei das Endgerät aufweist:
ein Extraktionsmodul (54), das geeignet ist, von einer AFL-Nachricht, die von der elektronischen Vorrichtung (4) bei der Transaktion (TR) empfangen wird, eine Dateneinheit zur Referenzierung (DRF) zu extrahieren, die dem Endgerät ermöglicht, die Sicherheitsinformation (IS) in einem gesicherten Speicher (10) der elektronischen Vorrichtung zu lesen.

## Claims

1. A method for sending security information (IS) implemented by an electronic device (4), said method comprising the following steps:
- detecting (S2) an event encountered by the electronic device;
- recording (S6), in a secure memory (10) of the device, security information (IS) representative of said event;
- starting (S8), before or after said recording, a transaction (TR) with an outer terminal (30); and
- sending (S10), to the outer terminal, the security information (IS) in a transaction message (E20a; E20b; E34c) during said transaction (TR)
wherein the transaction (TR) and the transaction message including the security information (IS) comply with the EMV, Europay Mastercard Visa, protocol,
wherein the event detected by the electronic device (4) comprises at least one of:
- an anomaly encountered by the electronic device; and
- an attack on the electronic device.

2. The method according to claim 1, wherein the event is detected by the electronic device (4) from the current value of a counter.

3. The method according to claim 2, wherein the event (EVT) is an anomaly or attack detected by the electronic device (4) by comparing the current value of the counter with a threshold value.

4. The method according to claim 2 or 3, wherein the counter represents at least one of:
- a consecutive number of failed attempts to enter a secret code; and
- a total number of incomplete transactions carried out by the electronic device (4).

5. The method according to any one of claims 2 to 4, wherein the security information (IS) comprises the current value of said counter recorded in the secure memory.

6. The method according to claim 1, wherein the electronic device (4) detects, as an event (EVT) during said detection (S2), a time interval between:
- sending an answer, by said electronic device, to a command from the outer terminal (30); and
- receiving a subsequent command from the outer terminal (30).

7. The method according to claim 6, wherein said electronic device (4) is configured to decide, from a comparison between said time interval and a predetermined threshold value, whether a data representative of said time interval must be recorded during the recording step.

8. The method according to any one of claims 1 to 7, wherein said event satisfies at least one of the following conditions:
- the event causes a reset of the electronic device (4); and
- the event comprises the execution by the electronic device (4) of an operation affecting a confidential code stored in a secure memory of the electronic device.

9. The method according to any one of claims 1 to 8, wherein abnormal behavior of the electronic device or an attack against said electronic device is detected if at least one condition pre-recorded in the electronic device is satisfied.

10. The method according to any one of claims 1 to 9, comprising sending to the outer terminal, in an AFL message, a referencing data (DRF) allowing the outer terminal (3) to read the security information (IS) in the secure memory (10) of the electronic device;
the security information (IS) being sent (S10, E20a) to the outer terminal in answer to a read command (E18a) received from the outer terminal after sending the AFL message.

11. The method according to any one of claims 1 to 9, comprising sending to the outer terminal (30), in a message complying with the EMV standard of the ATR or APPLICATIONS type, a referencing data (DRF) allowing it to read the security information (IS) in the secure memory (IS) of the electronic device.

12. The method according to any one of claims 1 to 9, the security information being sent (S10, E34c) to the outer terminal (30) as non-interpretable data (IDD) by the outer terminal in answer to a GENERATE AC message received (E30) from the outer terminal.

13. A computer program (PG1) including instructions for executing the steps of a sending method according to any one of claims 1 to 12 when said program is executed by a processor (5).

14. A recording medium (10) readable by a processor (5) on which a computer program (PG1) is recorded, comprising instructions for executing the steps of a sending method according to any one of claims 1 to 12.

15. A processing method implemented by a terminal (30) external to an electronic device (4), said method comprising the following steps:
- starting (E12) a transaction (TR) with the electronic device (4);
- receiving (E20a; E20b; E34c), coming from the electronic device, a transaction message containing security information (IS) during the transaction (TR), said security information being representative of an event detected by the electronic device; and
- processing (E36a, E38a; E36b, E38b; E36c, E38c) security information,
wherein the transaction (TR) and the transaction message including the security information (IS) comply with the EMV, Europay Mastercard Visa, protocol,
the processing comprising an analysis from the security information and an adaptation, if necessary, of the processing of the transaction to the security information,
wherein the event represented by the security information comprises at least one of:
- an anomaly encountered by the electronic device; and
- an attack on the electronic device.

16. The processing method according to claim 15, wherein said processing comprises at least one of:
- performing (E38c) a risk analysis associated with said transaction from the security information; and
- sending (E36c) the security information to a remote server (45) of the outer terminal.

17. An electronic device (4) comprising:
- a module for detecting (14) an event encountered by the electronic device;
- a module for obtaining (16) security information representative of said event;
- a module for recording (18), in a secure memory of the device, the security information;
- an execution module (20) able to start, before or after the recording of the security information, a transaction with the outer terminal; and
- a module for sending (22), to the outer terminal, the security information in a transaction message during said transaction,
wherein the transaction (TR) and the transaction message including the security information (IS) comply with the EMV, Europay Mastercard Visa, protocol, and
wherein the event detected by the electronic device (4) comprises at least one of:
- an anomaly encountered by the electronic device; and
- an attack on the electronic device.

18. The device according to claim 17, wherein the execution module (20) is able to continue the transaction to its completion once the security information has been sent to the outer terminal.

19. The electronic device according to claim 17 or 18, the electronic device being a smart card.

20. The electronic device according to any one of claims 17 to 19, the detection module comprising at least one of:
- a first processing module able to detect said event from a command received from an external entity by an interface module of the electronic device, said interface module making it possible to establish a communication between the electronic device and said electronic entity; and
- a sensor able to detect an attack occurring on the electronic device and a second processing module able to detect said event from the detected attack.

21. A terminal (30) external to an electronic device (4), said terminal comprising:
- an execution module (48) able to start a transaction (TR) with the electronic device;
- a receiving module (50) able to receive, from the electronic device, a transaction message containing security information (IS) during the transaction, said security information being representative of an event detected by the electronic device (4); and
- a processing module (52) able to process security information,
wherein the transaction (TR) and the transaction message including the security information (IS) comply with the EMV, Europay Mastercard Visa, protocol,
the processing module being configured to perform an analysis from the security information and to adapt, if necessary, the processing of the transaction to the security information,
wherein the event represented by the security information comprises at least one of:
- an anomaly encountered by the electronic device; and
- an attack on the electronic device.

22. The terminal (30) according to claim 21, the terminal comprising:
an extraction module (54) able to extract, from an ATR message received from the electronic device (4) during the transaction (TR), a referencing data (DRF) allowing the terminal to read the security information (IS) in a secure memory (10) of the electronic device.
